# EUROPÄISCHE PATENTANMELDUNG

(11) **EP 0 574 786 A1**
(43) Veröffentlichungstag der Anmeldung: **22.12.1993**
(21) Anmeldenummer: 93109116.9
(22) Anmeldetag: 07.06.1993
(51) Int. Cl.: B32B 33/00, B32B 27/08, C08J 7/04, C09D 165/00, H01B 1/12

(54) **Heisssiegelfähige, antistatisch beschichtete Folien und Folienlaminate, Verfahren zu deren Herstellung und deren Verwendung**

(30) Priorität: 13.06.1992 DE 4219410
(71) Anmelder: HOECHST AKTIENGESELLSCHAFT, D-65926 Frankfurt am Main (DE)
(72) Erfinder: Kochem, Karl-Heinz, Dr., W-6530 Bingen-Dietersheim (DE); Schmidt, Michael, W-6227 Oestrich-Winkel (DE)

(57) **Zusammenfassung**

Die Erfindung betrifft eine Schweiß- und/oder siegelfähige ein- oder mehrschichtige Folie mit mindestens einer schweiß- und/oder siegelfähigen Schicht, wobei die schweiß- und/oder siegelfähige Folie mindestens einseitig auf einer äußeren Oberfläche mit einer antistatischen Schicht versehen ist, wobei die antistatische Schicht eine Schichtdicke von 0,005 bis 0,08 µm besitzt und zu mindestens 60 Gew.-% aus einem löslichen, intrinsisch elektrisch leitfähigen Polymeren besteht, welches sich aus Struktureinheiten der Formel 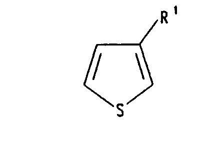
zusammensetzt, worin R¹ eine C₁ bis C₁₂- oder eine C₆ bis C₃₀-Alkoxygruppe bedeutet und welches einen Polymerisationsgrad <100 besitzt, wobei das Polymere oder Oligomere in oxidierter Form vorliegt und zur Kompensation der positiven Ladung eine entsprechende Anzahl von Anionen aufweist. Diese Folien sind trotz ihrer antistatischen Beschichtung siegelbar.

## Beschreibung

Für die Verpackung hochsensibler elektronischer Bauteile und bestückter Leiterplatten werden immer häufiger antistatisch ausgerüstete Kunststoffmaterialien eingesetzt. Beispielsweise werden sowohl für den innerbetrieblichen Transport beim Hersteller bestückter Leiterplatten als auch für den Transport zum Kunden antistatisch ausgerüstete Folien und Folienlaminate verwendet. Sehr häufig sind dies heißsiegelfähige Folien aus Polyethylen oder Laminate aus Polyester- und Polyethylenfolien, wobei mittels Heißsiegelung der Polyethylenfolienschichten gegeneinander bei Temperaturen zwischen 140 °C und 200 °C Verpackungsbeutel hergestellt werden können. Derartige Beutel werden üblicherweise dadurch antistatisch ausgerüstet, daß entweder Außen- und Innenseite mit sogenannten chemischen Antistatika (z.B. quartäre Ammoniumsalze, sterisch gehinderte Amine, etc.) beschichtet werden oder die Polyethylenfolie bereits bei der Herstellung (Extrusion) volumenmäßig mit chemischen Antistatika, Leitruß und/oder Graphit oder Metallfasern beziehungsweise -partikeln ausgerüstet (gefüllt) werden. Bei Folien, die üblicherweise selbst nicht heißsiegelfähig sind, wie z.B. biaxial verstreckte Polyester- und Polypropylenfolien, werden diese entweder mit antistatisch ausgerüsteten, heißsiegelfähigen Folien (z.B. Polyethylen) laminiert, wobei auch die nicht siegelfähigen Folienschichten vor oder nach der Laminierung mit antistatischen Schichten versehen werden können (z.B. in Form von Lacken, die chemische Antistatika enthalten oder in Form von Vakuumbeschichtungen mit Metallen oder Metalloxiden), oder sie werden mit sogenannten Schmelzkleberschichten in Dicken bis maximal einige Mikrometer versehen, die dann ihrerseits wieder antistatisch (meist über Zusätze chemischer Antistatika) ausgerüstet sind.

Nachteilig bei der Verwendung von Füllstoffen, wie z.B. Leitruß/Graphit und/oder Metallfasern/-partikeln, ist die stark reduzierte Transparenz der Beutel sowie - im Falle von Leitruß - möglicher Abrieb, der bei den verpackten elektronischen Bauteilen Fehler (z.B. Kurzschlüsse) verursachen kann. Bei Verwendung chemischer Antistatika ist die häufig korrosive Wirkung dieser Additive auf Metalle, die zumeist unzureichende Antistatikwirkung (übliche Oberflächenwiderstände oberhalb 10¹⁰ Ohm) und die im allgemeinen starke Abhängigkeit der Antistatikwirkung von der umgebenden Luftfeuchte nachteilig.

Seit Anfang der 70er Jahre wird weltweit an der Synthese sogenannter "intrinsisch" elektrisch leitfähiger Polymere gearbeitet. Gemeint sind hiermit polymere Materialien, die ohne Zusatz elektrisch leitfähiger Stoffe wie Metallpulver oder -fasern, Leitruß u.ä. eine Eigenleitfähigkeit besitzen. Beispiele solcher Polymere sind Polyacethylen, Polypyrrol, Polythiophen, Polyanilin, Polyparaphenylen, Polyphenylensulfid, etc. Elektrisch leitfähig sind derartige polykonjugierte Bindungssysteme jedoch nur im sogenannten "dotierten Zustand", d.h. sie müssen mittels eines Oxidations- oder Reduktionsmittels im Rahmen einer elektrochemischen oder chemischen Reaktion in einen leitfähigen Zustand überführt werden. Im dotierten Zustand sind die oben aufgezeigten Materialien jedoch alle unlöslich und unschmelzbar - also für eine Weiterverarbeitung nicht geeignet.

Bis vor wenigen Jahren gab es nur wenig konkrete Anwendungsmöglichkeiten für intrinsisch elektrisch leitfähige Polymere. Nachteilig war außerdem die geringe Stabilität der neuen Materialien, insbesondere in feuchten Atmosphären.

Um zu verarbeitbaren elektrisch leitfähigen Polymeren zu kommen, wurden lösliche intrinsisch elektrisch leitfähige Polymere entwickelt (vgl. R.L. Elsenbaumer, K.Y. Jen and R. Oboodi, Synth. Met. 15 (1986), 169), wobei sich vor allem elektrochemisch synthetisierte dotierte Polyalkoxythiophene durch hohe Stabilität auszeichnen (M. Feldhues et al, Synth. Met. 28 (1989), C487). Diese Polyalkoxythiophene sind in dotierter Form in organischen aprotischen Lösemitteln wie Toluol, Tetrahydrofuran, Acetonitril, Dimethylformamid oder N-methyl-pyrrolidon zu geringen Prozentsätzen löslich und eignen sich daher als Basismaterial zur elektrisch leitfähigen und/oder antistatischen Beschichtung von Substraten (EP-A-0 328 981, EP-A-0 257 573, EP-A-0 328 982).

Außerdem können Beschichtungen auch mittels Dispersionen (wäßrig oder nichtwäßrig) auf Basis intrinsisch leitfähiger Polymere hergestellt werden (z.B. Dispersionen auf Basis von leitfähigem Polyanilin, s. DE-A-38 34 526).

Bei der Beschichtung von heißsiegelfähigen Folien und Folienlaminaten zur Herstellung beispielsweise von Verpackungsbeuteln mit intrinsisch elektrisch leitfähigen Polymeren besteht jedoch die Gefahr, daß die Heißsiegelfähigkeit der beschichteten Folien infolge der Beschichtung stark abnimmt und für die gewünschte Anwendung nicht mehr ausreicht.

In der DE-A-38 38 652 und EP-A-0 307 683 ist ein Verfahren zur antistatischen Ausrüstung von auf Kunststoff-Formteilen befindlichen Schmelzkleberschichten beschrieben. Dazu werden die Schmelzkleberschichten, beispielsweise schmelzbare, hochmolekulare Ethylen-Vinylacetat-Copolymere und Mischungen hiervon mit Harzen, Wachsen beziehungsweise Paraffinen sowie Copolymere des Vinylchlorids und des Vinylidenchlorids, ferner Copolymere des Vinylacetats sowie Polymethacrylsäureester, Polyurethane und Polyester, mit einer gegebenenfalls Bindemittel enthaltenden Lösung beziehungsweise Dispersion einer elektrisch leitenden Verbindung beispielsweise eines elektrisch leitfähigen, fein verteilten Feststoffes beschichtet. Solche elektrisch leitfähigen Stoffe beziehungsweise Verbindungen können u.a. auch intrinsisch elektrisch leitfähige Polyheteroaromaten, Leitfähigkeitsruße, Metalloxide oder Metallpulver sein. Zusätzliche Bindemittel können dazu dienen, die Verklebung mittels Heißsiegelung und/oder Hochfrequenz-(HF-)-Schweißung zu verbessern.

Es ist jedoch allgemein bekannt, daß derartige Beschichtungen, die nichtschmelzbare elektrisch leitfähige Materialien, wie z.B. dotierte intrinsisch leitfähige Polymere, enthalten und die nicht auf Schmelzkleberschichten, sondern direkt auf Kunststoffe, insbesondere Folien, aufgebracht werden, die üblicherweise selbst heißsiegelfähig, thermisch verschweißbar, HF- oder ultraschallverschweißbar sind, die Siegeleigenschaften dieser Kunststoffe stark herabsetzen. Daher werden beispielsweise heißsiegelfähige Polyethylenfolien heute üblicherweise durch geringe Zusätze chemischer Antistatika (quartäre Ammoniumsalze, Alkylsulfonate, -sulfate, -phosphate, Fettsäureester, -ether, etc.) antistatisch ausgerüstet, wobei diese Antistatika durch ihre hydrophilen Eigenschaften Umgebungsfeuchte anziehen und so (Ionen)-Leitfähigkeit erzeugen. Der so erzielte Oberflächenwiderstand ist jedoch zumeist sehr hoch (≧ 10¹⁰ Ohm); viele dieser Substanzen wirken korrosiv auf Metallteile und die Antistatikwirkung ist luftfeuchteabhängig. Derartige Antistatika vermindern jedoch die Siegelfähigkeit nur geringfügig.

In der EP-A-0 292 905 beziehungsweise der EP-A-0 328 981 sind Beschichtungsmassen für die antistatische Ausrüstung von Folien beschrieben, die sich aus einem oder mehreren Bindemitteln sowie 10 bis 100 Gew.-% eines intrinsisch elektrisch leitfähigen nicht-schmelzbaren Oligomeren zusammensetzt, welches elektrochemisch synthetisiert und in der oxidierten Form in polar aprotischen Lösemitteln bei Raumtemperatur vollständig löslich ist und das unter anderen aus Struktureinheiten der Formel 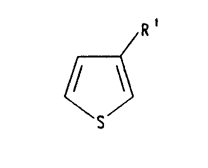
erhalten wurde, worin R¹ eine C₁ bis C₁₂- (EP-A-0 292 905) beziehungsweise C₆ bis C₃₀- (EP-A-0 328 981) Alkoxygruppe bedeutet. Diese elektrisch leitfähigen Oligomere enthalten in ihrer oxidierten Form zur Kompensation der positiven Ladungen auf der Oligomerkette eine entsprechende Anzahl von Anionen, vorzugsweise Anionen des Leitsalzes, das bei dem Elektrolyseherstellverfahren eingesetzt wird. Beispiele sind BF₄⁻, PF₆⁻, SbF₆⁻, SbCl₆⁻, FeCl₄⁻, [Fe(CN)₆]³⁻, usw.

In der DE-U-88 14 712.6 sind Verbundfolien beschrieben, die mit Schichten aus diesen leitfähigen Polymeren beziehungsweise Oligomeren versehen sind. Die Siegeleigenschaften derartiger Verbundfolien (u.a. Polyester/Polyethylen-Verbunde) sind dort nicht beschrieben.

In Kunststoffe 82(1992), 22 ist die Beschichtung einer Polyethylenterephthalatfolie mit Polyethoxythiophen (PEOT) beschrieben. Die Beschichtung erfolgte durch Tiefdruck mittels eines Lackes, der 4 bis 8 % Feststoffgehalt aufwies in einer Auftragsmenge von 1 bis 4 g/m², so daß die Trockenschichtdicke dieser antistatischen Beschichtung mindestens 100 nm erreichte.

Es wurde nun durch Versuche festgestellt, daß die zuvor beschriebenen Beschichtungsmassen, aufgetragen in Trockenschichtdicken von 100 nm und mehr, die Siegelfähigkeit der zuvor siegelfähigen Folien im allgemeinen so stark herabsetzt, daß eine Siegelung oder Schweißung mittels Wärme, Ultraschall oder Hochfrequenz nicht mehr oder nur noch schlecht möglich ist.

Sofern man die Siegeleigenschaften einer solchen Folie jedoch ausnutzen will, muß man dafür Sorge tragen, daß auf die zu siegelnden oder zu verschweißenden Ränder dieser Folien keine Beschichtung aufgetragen wird, was verfahrenstechnisch sehr aufwendig ist, da für jede geforderte Folienbreite eine gesonderte Beschichtungsvorrichtung - beispielsweise in Form von speziell gravierten Tiefdruckwalzen - zur Verfügung stehen muß.

Aufgabe der vorliegenden Erfindung war es dementsprechend, Folien bzw. Folienverbunde zur Verfügung zu stellen, die
a) gute antistatische Eigenschaften aufweisen,
b) gleichzeitig gute Siegeleigenschaften besitzen, und
c) gegenüber mit solchen Folien in Berührung kommenden Materialien inhärent sind.

Überraschenderweise wurde gefunden, daß die Beschichtung mit den oben genannten intrinsisch elektrisch leitfähigen nicht-schmelzbaren Oligomeren dann die Siegel- und Schweißbarkeit der Folien nur unwesentlich beeinträchtigt, wenn die Dicke der aufgebrachten Schicht unterhalb 0,08 µm, vorzugsweise unterhalb 0,05 µm, liegt und der Polymerisationsgrad des intrinsisch elektrisch leitfähigen Poly(alkoxythiophens) <100, vorzugsweise <50, ist.

Die Erfindung betrifft dementsprechend eine schweiß- und/oder siegelfähige ein- oder mehrschichtige Folie mit mindestens einer äußeren schweiß- und/oder siegelfähigen Schicht, wobei die schweiß- und/oder siegelfähige Folie mindestens einseitig mit einer antistatischen Schicht versehen ist, dadurch gekennzeichnet, daß die antistatische Schicht eine Schichtdicke von 0,005 bis 0,08 µm besitzt und zu mindestens 60 Gew.-% aus einem löslichen, intrinsisch elektrisch leitfähigen Polymeren oder Oligomeren besteht, welches sich aus Struktureinheiten der Formel 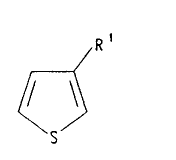
zusammensetzt, worin R¹ eine C₁ bis C₁₂- oder eine C₆ bis C₃₀-Alkoxygruppe bedeutet und welches einen Polymerisationsgrad <100 besitzt.

Üblicherweise schweiß- beziehungsweise siegelfähige Folien sind beispielsweise: Folien aus Polyvinylchlorid, insbesondere Hart-PVC, Polypropylen (unorientiert), Polyethylen hoher und niedriger Dichte und amorpher Polyester sowie mono- oder biaxial orientierte Folien aus beliebigen thermoplastischen Materialien, auf die eine siegelfähige Schicht aufgebracht wurde. Derartige Siegelschichten können, ohne Beschränkung der Allgemeinheit, beispielsweise aus C₂-C₃-Olefincopolymeren, C₂-C₃-C₄-Olefinterpolymeren, Polyestern und Copolyestern, Ethylen, Ethylen-Vinylacetat-Copolymeren, Polyvinylidenchlorid, etc. bestehen.

Zur antistatischen Beschichtung dieser Folien wird das oben beschriebene intrinsisch elektrisch leitfähige Oligomer zunächst in Lösung gebracht, wobei der Oligomeranteil maximal 10 Gew.-%, bevorzugt 0,1 bis 6 Gew.-%, besonders bevorzugt 0,5 bis 3 Gew.-% beträgt (bezogen auf das Gewicht der Lösung). Zu dieser Lösung können dann noch zusätzliche Additive hinzugegeben werden.

Derartige Additive für lösemittelhaltige Lacksysteme können beispielsweise sein
- Verlaufsmittel:: wie Acrylpolymere oder Acrylcopolymere (z.B. Edaplan LA 400, Münzing Chemie; Additol XL 480 Hoechst AG) oder Hochsieder wie Butylglykol oder Silikonöle beziehungsweise -harze (z.B. Edaplan LA 411, Münzing Chemie)
- Haftverbesserer:: wie chlorierte Polyolefine (z.B. CP 515-2, Eastman Kodak) oder hochdisperse Kieselsäuren (z.B. Aerosil 200, Degussa) oder Polurethanharze
- Netzmittel:: wie nichtionische Acetylendiole (z.B. Surfynol 104, Air Products) oder Fluortenside (z.B. Fluowet-Typen, Hoechst AG)
Außerdem ist es prinzipiell möglich, auch Bindemittel in Lösung zu geben. Derartige Bindemittel können auch Materialien sein, die selbst zur Herstellung von Siegelschichten (s. oben) verwendet werden. Dabei ist es nicht erforderlich, daß diese Bindemittel und zusätzlichen Additive selbst gelöst werden. Zu Beschichtungszwecken ist auch eine Dispersion dieser Bestandteile ausreichend.

Nach Herstellung der Lösung beziehungsweise Dispersion wird die Substratfolie beispielsweise mittels Rakelantrag, Tiefdruck, Flexodruck oder Sprühverfahren mit dieser Lösung beschichtet und anschließend das Lösemittel mittels Wärme (thermisch oder IR) verdampft.

Durch die niedrige Schichtdicke und die Verwendung von Oligomeren mit geringem Polymerisationsgrad wird erreicht, daß in der zu siegelnden Zone die Durchmischung des aufgeschmolzenen Kunststoffmaterials der Substratfolie nicht wesentlich beeinflußt wird und der Gehalt an nicht-siegelfähigem Material, insbesondere des leitfähigen Oligomers beziehungsweise Polymers, in der Schmelzzone gering ist. Dazu ist je nach Substratfolie eine andere Schichtdicke zu wählen.

Die getrocknete Schicht ist hochtransparent mit leicht blauer Einfärbung und antistatisch mit einem Oberflächenwiderstand (je nach Schichtdicke) zwischen 10⁵ und 10¹¹ Ohm, vorzugsweise zwischen 10⁶ und 10⁹ Ohm, wobei der Oberflächenwiderstand durch Variation der Schichtdicke oder, bei Verwendung von zusätzlichen Bindemitteln, durch Änderung des Gehalts an leitfähigem Polymer beziehungsweise Oligomer in der Lösung variiert werden kann. Die Folien können entweder als Monofolie oder als Laminat mit anderen Folien als antistatisches Verpackungsmaterial verwendet werden, wobei die Siegelfähigkeit beziehungsweise Schweißbarkeit die Herstellung von Beuteln oder peelfähigen Abdeckfolien von Blistergutverpackungen ermöglicht.

Gegenstand der vorliegenden Erfindung sind daher schweiß- beziehungsweise siegelfähige Folien sowie Folienlaminate mit mindestens einer schweiß- beziehungsweise siegelfähigen Schicht auf einer der Außenseiten des Laminats, wobei die schweiß- beziehungsweise siegelfähigen Folien und Folienlaminate ein- oder beidseitig mit einer antistatischen Schicht versehen sind, wobei die antistatische Schicht eine Schichtdicke von 0,005 bis 0,08 µm, vorzugsweise zwischen 0,01 und 0,05 µm besitzt und zu mindestens 60 Gew.-%, vorzugsweise zu mindestens 75 Gew.-%, aus einem löslichen, intrinsisch elektrisch leitfähigen Polymeren oder Oligomeren besteht, welches sich aus Struktureinheiten der Formel 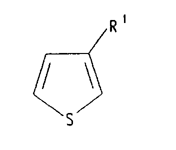
zusammensetzt, worin R¹ eine C₁ bis C₁₂-, vorzugsweise C₁ bis C₄- oder eine C₆ bis C₃₀-, vorzugsweise C₁₂ bis C₁₆-Alkoxygruppe bedeutet und welches einen Polymerisationsgrad <100, vorzugsweise <50, besitzt. Außerdem besitzt dieses elektrisch leitfähige Polymere beziehungsweise Oligomere in seiner hier verwendeten oxidierten Form zur Kompensation der positiven Ladungen auf der Polymerkette eine entsprechende Anzahl von Anionen, vorzugsweise Anionen der Form [BF₄]⁻, [PF₆]⁻, [SbF₆]⁻, [SbCl₆]⁻, [FeCl₄]⁻, [Fe(CN)₆]³⁻. Zusätzlich kann die Antistatikschicht auch beliebige Bindemittel, Netz- und Verlaufmittel sowie Haftvermittler oder sonstige Additive enthalten. Der Gesamtanteil dieser Zusatzstoffe in der Schicht sollte jedoch maximal 40 Gew.-%, vorzugsweise maximal 25 Gew.-%, betragen. Derart beschichtete Folien und Folienlaminate können neben der Antistatikschicht auch weitere Funktionsschichten besitzen, wobei jedoch mindestens eine siegel- beziehungsweise schweißfähige Seite mit der oben beschriebenen Antistatikschicht versehen sein muß. Zusätzliche Funktionsschichten können beispielsweise sein (ohne Beschränkung der Allgemeinheit): weitere Antistatikschichten, leitfähige Schichten (wie z.B. Metallschichten), optische Interferenzschichten, dielektrische Schichten, Halbleiterschichten, organische und anorganische Gas-Barriereschichten, etc.

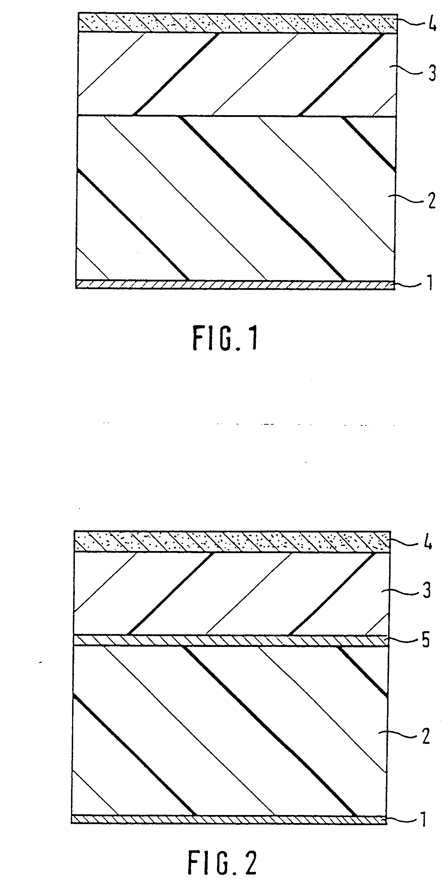

Bevorzugt sind Folienlaminate wie in Abbildung 1 und 2 dargestellt. Darin bedeuten 1 die oben beschriebenen Antistatikbeschichtungen, 2 eine siegelbeziehungsweise schweißfähige Folie, wie zum Beispiel aus Polyethylen, 3 eine Trägerfolie, wie zum Beispiel aus biaxial orientiertem Polyester oder Polypropylen für weitere Funktionsschichten 4 und 5. Bevorzugt sind dabei als äußere Funktionsschicht 4 Antistatikschichten beliebiger Art mit Oberflächenwiderständen unterhalb 10¹¹ Ohm, vorzugsweise Antistatikschichten wie sie in EP-A-0 292 905 und EP-A-0 328 981 beschrieben sind. Als innenliegende Funktionsschicht 5 sind bevorzugt Schichten aus Metallen (Al, Ag, Cu, Au, Cr, Ni, Fe, Zn, Sn, etc.) und Metalloxiden hieraus, vorzugsweise transparente im Vakuum aufgedampfte Schichten aus Metallen mit einer maximalen Schichtdicke von 50 nm.

Folienlaminate, vorzugsweise mit dem in Abbildung 1 und 2 gezeigten Aufbau, können dabei entweder durch Kleberkaschierung, Heißsiegelung, Coextrusion oder Extrusionsbeschichtung erzeugt werden. In den beiden ersten Fällen ergibt sich dann eine zusätzliche Schicht (Kleber-Heißsiegelschicht) zwischen 2 und 3 (Abb. 1) beziehungsweise 2 und 5 (Abb. 2); im Falle von Laminaten mit mehr als zwei Folien entsprechend zusätzliche Kleber- und Heißsiegelschichten zwischen den einzelnen Folienschichten.

Weiterhin betrifft die Erfindung ein Verfahren zur antistatischen Ausrüstung von siegelfähigen und/oder schweißbaren Folien und Folienlaminaten, durch Beschichtung der siegelfähigen und/oder schweißbaren Seite (beziehungsweise Seiten) mit einer Lösung oder Dispersion bestehend aus 90 bis 99 Gew.-%, vorzugsweise 94 bis 99 Gew.-%, eines oder mehrerer Lösemittel sowie 0,5 bis 10 Gew.-%, vorzugsweise 0,5 bis 6 Gew.-%, besonders bevorzugt 1 bis 4,5 Gew.-% darin gelösten und/oder dispergierten Substanzen, wobei dieser Anteil sich zusammensetzt zu 60 bis 100 Gew.-%, vorzugsweise 75 bis 100 Gew.-%, aus einem löslichen, intrinsisch elektrisch leitfähigen Polymeren oder Oligomeren, welches sich aus Struktureinheiten der Formel 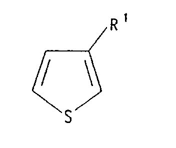
zusammengesetzt, worin R¹ eine C₁ bis C₁₂-, vorzugsweise C₁ bis C₄- oder eine C₆ bis C₃₀-, vorzugsweise C₁₂ bis C₁₆-Alkoxygruppe bedeutet und welches einen Polymerisationsgrad <100, vorzugsweise <50, besitzt sowie 0 bis 40 Gew.-%, vorzugsweise 0 bis 25 Gew.-% gelöste oder dispergierte Binde-, Netz- und/oder Verlaufmittel, Haftvermittler oder sonstige Additive.

Die Beschichtung der anzutragenden Lösung beziehungsweise Dispersion muß dabei so erfolgen, daß die Naßantragsmenge und der Feststoffgehalt der Lösung beziehungsweise Dispersion so gewählt werden, daß nach Verdampfung der Lösemittel eine Trockenschichtdicke zwischen 0,05 und 0,08 µm, vorzugsweise zwischen 0,01 und 0,05 µm, auf der Substratfolie entsteht, wobei übliche Beschichtungsverfahren für Lösungen und Dispersionen, wie z. B. Rakeln, Druckverfahren (Offsettdruck, Tiefdruck, Flexodruck), Glattwalzenantrag, Gießantrag oder Sprühbeschichtung, eingesetzt werden können. Dabei wird nach der Beschichtung der Substratfolie das Lösemittel thermisch oder mittels IR-Strahlung verdampft. Naßantragsmenge und Feststoffgehalt können durch einfache Routineversuche ermittelt werden.

Außerdem betrifft die Erfindung die Verwendung derart antistatisch beschichteter Folien und Folienlaminate zur Herstellung von Verpackungsmaterialien mit Schutzfunktion gegen elektrostatische Aufladungen, insbesondere von siegel- und/oder schweißbaren Verpackungsbeuteln sowie siegelfähigen beziehungsweise schweißbaren Folienbändern, die als Abdeckbänder für Blistergutverpackungen verwendet werden zur Verpackung elektronischer Bauteile und Baugruppen, bestückter Leiterplatten und einzelner elektronischer Bauelemente (Transistoren, Widerstände, Kondensatoren, etc.). Bei Verwendung von Laminaten, die wie oben beschrieben weitere Funktionsschichten enthalten (z. B. Metallschichten, Barriereschichten), können neben der Antistatikwirkung weitere Eigenschaftsprofile erzielt werden. Als Siegel- beziehungsweise Schweißverfahren können alle gängigen Methoden eingesetzt werden, wie z.B. thermische Verfahren sowie Ultraschall- und Hochfrequenzverfahren.

Im folgenden ist die Erfindung anhand von Beispielen näher erläutert.

### Beispiel 1

In einem Gemisch von 791 g Aceton und 7118,8 g N-Methylpyrrolidon (NMP) werden bei Raumtemperatur 76,0 g eines mit BF₄⁻ Anionen dotierten Poly-(ethoxythiophen), das im folgenden mit PEOT⁺BF₄⁻ bezeichnet wird, gelöst. Die Herstellung von PEOT⁺BF₄⁻ ist in EP-A-0 328 981 beschrieben. Eine massenspektrometrische Analyse zeigt, daß es sich um Oligomere mit einer durchschnittlichen Kettenlänge von 9 Monomereinheiten handelt. Die spezifische elektrische Leitfähigkeit beträgt ca. 1,2 S/cm (gemessen mittels Vierpunktmethode an einem Pulverpreßling). Als Additive werden der Lösung - unter ständigem Umrühren - 10 g CP 515-2 (chloriertes Polyolefin der Fa. Eastman Kodak; 40%ig in Xylol), 4 g Additol XL 480 (Verlaufhilfsmittel der Hoechst AG) und 0,24 g Aerosil TT 600 (hochdisperse Kieselsäure der Fa. Degussa; Antiblockmittel) hinzugegeben (Gesamtfeststoffgehalt 1,05 Gew.-%).

Der Ansatz wurde dann über eine Glasfilternutsche (Porosität 3) filtriert und in einem Laborhorizontalschüttler bei 280 Zyklen/min geschüttelt. Mit dieser Lösung wurde eine Polyethylenfolie niedriger Dichte (PE-LD Typ K51 der Fa. M&W; 50 µm Dicke; 600 mm Breite) mittels Tiefdruck kontinuierlich beschichtet und mittels Heißluft in zwei Stufen (90 °C und 100 °C) getrocknet. Die für den Tiefdruck verwendete vollflächige Rasterwalze hat eine Gravurtiefe von 7 µm bei einer Rasterdichte von 70 pro cm. Der Naßantrag betrug 1,3 g/m², was einer Trockenschichtdicke von ca. 15 nm entspricht. Die Beschichtungsgeschwindigkeit lag zwischen 45 und 50 m/min.

Die beschichtete Polyethylenfolie zeigt einen Oberflächenwiderstand von 9x10⁶ bis 1x10⁷ Ohm (DIN 53482 mittels Federzungenelektrode) und eine Transparenz von 84 % (ASTM 1003-61).

Die beschichtete Polyethylenfolie wurde anschließend auf einer Kaschieranlage mit einer 12 µm dicken Polyesterfolie (Hostaphan RN 12 der Fa. Hoechst AG) und einer 12 µm dicken, einseitig metallisierten Polyesterfolie gleichen Typs mittels eines Zweikomponenten-Polyurethanklebers (Liofol UK 2640/6800 der Fa. Henkel; 34%ig in Ethylacetat verdünnt) kontinuierlich laminiert. Die Polyesterfolien waren jeweils einseitig mit einer Antistatikschicht versehen wie sie in EP-A-0 292 905 beschrieben ist (Oberflächenwiderstand 5x10⁶ Ohm). Bei der metallisierten Polyesterfolie befand sich diese Antistatikschicht auf der nichtmetallisierten Seite. Die Kaschierung erfolgte derart, daß die jeweils antistatisch beschichteten Seiten der Polyester- und der Polyethylenfolie außen liegen.

Mit diesen Folienverbunden wurden Siegelprüfungen durchgeführt. Jeweils zwei PE-LD-Seiten wurden mit einem Heißsiegelgerät (Brugger HSD/ET) bei einem Siegeldruck von 5,5 bar, Siegeltemperaturen zwischen 160 °C und 200 °C und Siegelzeiten von 0,5 und 1,0 Sekunden heißgesiegelt. Die Siegelnahtfestigkeiten ergaben sich wie folgt:

| **Siegeltemperatur (°C)** | **Siegelzeit (sec)** | **Siegelnahtfestigkeit (N/15 mm)** |
|---|---|---|
| 160 | 1,0 | 10 |
| 180 | 0,5 | 17 |
| 180 | 1,0 | 20 |
| 200 | 0,5 | 20 |
| 200 | 1,0 | 21 |

Die Siegelnahtfestigkeiten wurden an einer Zugdehnungs-Prüfmaschine der Fa. Instron bei einer Abzugsgeschwindigkeit von 200 mm/min gemessen.

Die Werte für die Siegelnahtfestigkeiten erlauben den Einsatz dieser Verbunde beispielsweise für die Herstellung beidseitig antistatisch beschichteter Verpackungsbeutel. Bei Verwendung der metallisierten Polyesterfolie kann zusätzlich eine abschirmende Wirkung gegenüber elektromagnetischen Wechselfeldern erzielt werden.

### Beispiel 2

In 7000,0 g N-Methylpyrrolidon werden 72 g PEOT⁺BF₄⁻ unter Rühren gelöst, parallel dazu werden in 894,4 g N-Methylpyrrolidon 8,0 g Surfynol 104 (Dispergierhilfs- und Netzmittel der Fa. Air Products), 1,6 g Aerosil TT 600 (hochdisperse Kieselsäure von der Fa. Degussa) als Antiblockmittel und 20,0 g CP 515-2 gelöst beziehungsweise mit einem Ultraschalldesintegrator dispergiert. Hierbei ist eine Erwärmung des Ansatzes auf ca. 60 °C vorteilhaft, damit das chlorierte Polyolefin CP 515-2 in Lösung geht. Die beiden Ansätze werden danach unter Rühren vereinigt. Der Ansatz hat einen Feststoffgehalt von 1,1 % bei einem Verhältnis PEOT⁺BF₄⁻/CP 515-2 von 9:1. Die gesamte Lösung wird über eine Glasfilternutsche mit der Porosität 3 filtriert.

Mit dieser, wie oben beschriebenen, angesetzten Lösung wurde eine PE-LLD-Folie (Linear-Polyethylen niedriger Dichte; Typ K 4410, Fa. M&W, Dicke 50 µm, Breite 600 mm) mittels Tiefdruck vollflächig beschichtet (70er Tiefdruckzylinder mit 7 µm Ätztiefe) und bei 90 °C im Trockenkanal der aufgetragene Lack getrocknet. Der Naßantrag lag bei 1,3 g/m², was einer Trockenschichtdicke von ca. 15 nm entspricht. Die Beschichtungsgeschwindigkeit lag zwischen 45 und 50 m/min. Die beschichtete PE-LLD-Folie zeigt einen Oberflächenwiderstand von 3x10⁷ Ohm (DIN 53482 mittels Federzungenelektrode) und eine Transparenz von 85 % (ASTM 1003-61). Die, wie oben beschrieben, beschichtete PE-LLD-Folie wurde an einer Kaschiermaschine mit einer ebenfalls mit PEOT⁺BF₄⁻ beschichteten 12 µm dicken Polyesterfolie (siehe Beispiel 1 Hostaphan RN 12 der Hoechst AG) kaschiert, die beschichteten Seiten jeweils nach außen.

Als Kaschierkleber wurde ein Zweikomponenten-Polyurethankleber Liofol UK 2640/6800 (Fa. Henkel), verdünnt auf 34 % mittels Ethylacetat, verwendet. Der wie oben beschrieben hergestellte Verbund hat einen Oberflächenwiderstand auf der PE-LLD-Seite von 3x10⁷ Ohm und auf der Polyesterfolienseite von 5x10⁶ Ohm bei einer Transparenz von 82 % (ASTM 1003-61). Mit diesem Folienverbund wurden Siegeltests durchgeführt. Jeweils die PE-LLD-Folienseiten wurden mit einem Heißsiegelgerät (Brugger HSG/ET) bei einem Siegeldruck von 5,5 bar und Siegeltemperaturen von 160 °C bis 220 °C bei Siegelzeiten von einer halben und einer Sekunde, versiegelt. Die Siegelnahtfestigkeiten ergaben sich wie folgt:

| **Siegeltemperatur (°C)** | **Siegelzeit (sec)** | **Siegelnahtfestigkeit (N/15 mm)** |
|---|---|---|
| 160 | 1,0 | 12 |
| 180 | 0,5 | 12 |
| 180 | 1,0 | 18 |
| 200 | 0,5 | 25 |
| 200 | 1,0 | 30 |

Die Siegelnahtfestigkeiten wurden an einer Zugdehnungs-Prüfmaschine der Fa. Instron bei einer Abzugsgeschwindigkeit von 200 mm/min gemessen.

### Vergleichsbeispiel 1

Analog Beispiel 1 wird eine Lösung folgender Zusammensetzung hergestellt:
19,45 g Aceton
175,06 g NMP
4,75 g PEOT⁺BF₄⁺
0,625 g CP 515-2
0,015 g Aerosil TT 600
Dies entspricht einem Feststoffgehalt von 2,5 % bei sonst gleicher relativer Zusammensetzung wie in Beispiel 1. Zusätzlich werden 0,1 g Additol XL 480 dem Ansatz als Verlaufmittel hinzugegeben (gleiche Konzentration bezogen auf den Gesamtansatz wie in Beispiel 1).

Dieser Ansatz wurde über eine Glasfilternutsche (Porosität 3) filtriert und in einem Laborhorizontalschüttler bei 270 Zyklen/min geschüttelt.

Mit einem 4 µm Handrakel (Antragsmenge: 4 g/m²) wurde ein Verbund (DIN A4) aus Hostaphan RN12 und PE-LD, Typ K51 (Fa. M&W; 50 µm dick) mit der oben beschriebenen Zusammensetzung auf der PE-Seite beschichtet und nach Trocknung (Umlufttrockenschrank 85 °C/2 min) ein Oberflächenwiderstand von 2x10⁵ Ohm gemessen (Trockenschichtdicke: ca 100 nm). Siegelversuche wurden analog zu Beispiel 1 durchgeführt.

| **Siegeltemperatur [°C]** | **Siegelzeit [sec]** | **Siegelnahtfestigkeit [N/15 mm]** |
|---|---|---|
| 160 | 1,0 | 1 |
| 180 | 0,5 | 1 |
| 180 | 1,0 | 2 |
| 200 | 0,5 | 2 |
| 200 | 1,0 | 3 |

### Vergleichsbeispiel 2

Lösung analog Beispiel 2 mit folgender Zusammensetzung:
193,15 g NMP
4,50 g PEOT⁺BF₄⁺
1,25 g CP 515-2
0,10 g Aerosil TT 600
Feststoffgehalt 2,57 %; gleiche relative Zusammensetzung wie in Beispiel 2. Zusätzlich werden 0,2 g Additol XL 480 als Verlaufmittel hinzugegeben (gleiche Konzentration bezogen auf den Gesamtansatz wie in Beispiel 2).

Antrag wie in Vergleichsbeispiel 2 auf Verbund (DIN A4) Hostaphan RN 12 und PE-LLD-Folie, Typ K 4410 (Fa. M&W). Beschichtung auf der PE-Seite.

| | |
|---|---|
| Oberflächenwiderstand | 1x10⁵ Ohm |
| Transparenz | 63 % (ASTM 1003-61) |
| Trockenschichtdicke | 100 nm |

Die Siegelnahtfestigkeiten ergaben sich wie folgt:

| **Siegeltemperatur [°C]** | **Siegelzeit [sec]** | **Siegelnahtfestigkeit [N/15 mm]** |
|---|---|---|
| 160 | 1,0 | 2 |
| 180 | 0,5 | 2 |
| 180 | 1,0 | 2 |
| 200 | 0,5 | 3 |
| 200 | 1,0 | 4 |

## Patentansprüche

1. Schweiß- und/oder siegelfähige ein- oder mehrschichtige Folie mit mindestens einer schweiß- und/oder siegelfähigen Schicht, wobei die schweiß- und/oder siegelfähige Folie mindestens einseitig auf einer äußeren Oberfläche mit einer antistatischen Schicht versehen ist, dadurch gekennzeichnet, daß die antistatische Schicht eine Schichtdicke von 0,005 bis 0,08 µm besitzt und zu mindestens 60 Gew.-% aus einem löslichen, intrinsisch elektrisch leitfähigen Polymeren oder Oligomeren besteht, welches sich aus Struktureinheiten der Formel 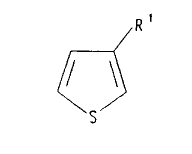 zusammensetzt, worin R¹ eine C₁ bis C₁₂- oder eine C₆ bis C₃₀-Alkoxygruppe bedeutet und welches einen Polymerisationsgrad <100 besitzt, wobei das Polymere oder Oligomere in oxidierter Form vorliegt und zur Kompensation der positiven Ladung eine entsprechende Anzahl von Anionen aufweist.

2. Folie nach Anspruch 1, dadurch gekennzeichnet, daß die antistatische Schicht eine Trockenschichtdicke von 0,01 bis 0,05 µm aufweist.

3. Folie nach Anspruch 1 oder 2, dadurch gekennzeichnet, daß die antistatische Schicht zu mindestens 75 Gew.-% aus dem intrinsisch elektrisch leitfähigen Polymeren besteht, welches sich aus Struktureinheiten der Formel 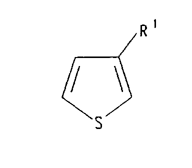 zusammensetzt.

4. Folie nach einem oder mehreren der Ansprüche 1 bis 3, dadurch gekennzeichnet, daß R¹ eine (C₁-C₄)- oder eine (C₁₂-C₁₆)-Alkoxygruppe bedeutet.

5. Folie nach einem oder mehreren der Ansprüche 1 bis 4, dadurch gekennzeichnet, daß der Polymerisationsgrad des intrinsisch elektrisch leitfähigen Polymeren < 50 ist.

6. Folie nach einem oder mehreren der Ansprüche 1 bis 5, dadurch gekennzeichnet, daß der Oberflächenwiderstand der Folie zwischen 10⁵ und 10¹¹ Ohm liegt.

7. Folie nach einem oder mehreren der Ansprüche 1 bis 6, dadurch gekennzeichnet, daß die antistatische Schicht bis zu 40 Gew.-% Additive enthält.

8. Folie nach Anspruch 7, dadurch gekennzeichnet, daß die Additive ausgewählt werden aus Bindemittel, Netzmittel, Verlaufmittel, Gleitmittel, Haftvermittler und Mischungen der genannten Stoffe.

9. Folie nach einem oder mehreren der Ansprüche 1 bis 8, dadurch gekennzeichnet, daß sie dreischichtig ist.

10. Folie nach einem oder mehreren der Ansprüche 1 bis 8, dadurch gekennzeichnet, daß sie vierschichtig ist.

11. Folie nach einem oder mehreren der Ansprüche 1 bis 8, dadurch gekennzeichnet, daß sie fünfschichtig ist.

12. Folie nach Anspruch 9, gekennzeichnet durch den Schichtaufbau
- Antistatikschicht (0,005 - 0,08 µm dick)
- siegelfähige Schicht
- nicht siegelfähige Trägerschicht.

13. Folie nach Anspruch 10, gekennzeichnet durch den Folienaufbau
- Antistatikschicht (0,005 - 0,08 µm dick)
- siegelfähige Schicht
- nicht siegelfähige Trägerschicht
- zusätzliche Antistatikschicht.

14. Folie nach Anspruch 11, gekennzeichnet durch den Folienaufbau
- Antistatikschicht (0,005 - 0,08 µm dick)
- siegelfähige Schicht
- Schicht aus Metall und/oder Metalloxid
- nicht siegelfähige Trägerschicht
- zusätzliche Antistatikschicht.

15. Folie nach einem oder mehreren der Ansprüche 1 bis 14, dadurch gekennzeichnet, daß die Folie eine Gesamtstärke von 1 bis 400 µm, vorzugsweise 12 bis 200 µm, aufweist.

16. Verfahren zur Herstellung einer Folie gemäß Anspruch 1, dadurch gekennzeichnet, daß eine ein- oder mehrschichtige Folie mit mindestens einer außenliegenden siegelbaren Schicht auf der Oberfläche dieser siegelbaren Schicht mit einer Lösung oder Suspension bestrichen wird, wobei die Lösung oder Suspension ein lösliches, intrinsisch elektrisch leitfähiges Polymere oder Oligomere enthält, welches sich aus Struktureinheiten der Formel 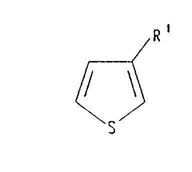 zusammensetzt und einen Polymerisationsgrad von < 100 aufweist, wobei das Polymere oder Oligomere in oxidierter Form vorliegt und zur Kompensation der positiven Ladung eine entsprechende Anzahl von Anionen aufweist, so daß die durch den Lösungs- oder Suspensionsantrag entstehende Schicht nach der Trocknung eine Dicke von 0,005 bis 0,08 µm aufweist.

17. Verwendung einer Folie nach einem oder mehreren der Ansprüche 1 bis 15 als Antistatikfolie.

18. Verwendung einer Folie nach Anspruch 17 zur Herstellung von versiegelbaren Antistatikbeuteln oder Abschirmbeuteln.

19. Verwendung einer Folie nach einem oder mehreren der Ansprüche 1 bis 15 als Blistergurtabdeckungen.

20. Antistatikbeutel, bestehend aus einer Folie nach einem oder mehreren der Ansprüche 1 bis 15.

21. Verwendung einer Folie nach einem oder mehreren der Ansprüche 1 bis 15 als antistatisches Klebeband.

22. Antistatisch beschichtete Folie, gekennzeichnet durch
- eine antistatische Beschichtung im Siegelflächenbereich
- eine unter der Antistatikschicht befindlichen Siegelschicht
- eine Siegelnahtfestigkeit von mindestens 10 N/15 mm (nach Siegelung).
